# EUROPÄISCHE PATENTANMELDUNG

(11) **EP 3 578 045 A1**
(43) Veröffentlichungstag der Anmeldung: **11.12.2019**
(21) Anmeldenummer: 18176733.6
(22) Anmeldetag: 08.06.2018
(51) Int. Cl.: A01M 7/00

(54) **VORRICHTUNG ZUR VERMEIDUNG VON SPRÜHNEBELABDRIFT UND/ODER ZUM AUFFANGEN UND RECYCELN VON PFLANZENSCHUTZBRÜHE**

(71) Anmelder: OWT GmbH & Co KG, 8152 Stallhofen (AT)
(72) Erfinder: Lind, Karl, 8200 Gleisdorf (AT); Lind, Christoph, 5671 Bruck an der Glocknerstraße (AT)
(74) Vertreter: Röggla, Harald

(57) **Zusammenfassung**

Vorrichtung (1) zur Vermeidung von Sprühnebelabdrift und/oder zum Auffangen und Recyceln von Pflanzenschutzbrühe mit einer Tragestruktur (2) und einem mit der Tragestruktur (2) verbundenen Auffangschirm (3) und/oder mit, mit der Tragestruktur (2) verbunden Sprühdüsen (13), wobei die Tragestruktur (2) zumindest teilweise aus einer Aufblasstruktur (4) besteht und der Auffangschirm (3) und/oder die Sprühdüsen (13) an der Aufblasstruktur (4) befestigt sind, wobei ein pneumatisches Gelenk (6) mit einer Hebestruktur (7) vorgesehen ist, und der Auffangschirm (3) und/oder die Sprühdüsen (13) von dem pneumatischen Gelenk (6) zwischen einer Auffangbetriebslage, zum Auffangen der Pflanzenschutzbrühe, beziehungsweise einer Sprühbetriebslage, zum Sprühen der Pflanzenschutzbrühe, und einer Wendebetriebslage, mit zur Auffangbetriebslage angehobenem Auffangschirm (3) beziehungsweise zur Sprühbetriebslage angehobenen Sprühdüsen (13), schwenkbar gelagert ist.

## Beschreibung

Die Erfindung betrifft eine Vorrichtung zur Vermeidung von Sprühnebelabdrift und/oder zum Auffangen und Recyceln von Pflanzenschutzbrühe mit einer Tragestruktur und einem mit der Tragestruktur verbundenen Auffangschirm und/oder mit, mit der Tragestruktur verbunden Sprühdüsen, wobei die Tragestruktur zumindest teilweise aus einer Aufblasstruktur besteht und der Auffangschirm und/oder die Sprühdüsen an der Aufblasstruktur befestigt sind.

Auf dem Gebiet der modernen Landwirtschaft erfordert die erwerbsmäßige Produktion von Früchten und die Pflege von Kultur- und Nutzpflanzen einen Schutz der Pflanzen vor Krankheiten und Schädlingen. Zu diesem Zweck werden Pflanzenschutzmittel eingesetzt, welche auf die Pflanzen angewendet werden. Ohne einen zusätzlichen Pflanzenschutz sind sowohl die erzielten Erntemengen als auch die Qualität der produzierten landwirtschaftlichen Produkte starken witterungsbedingten Schwankungen unterworfen. Dies gilt sowohl für die konventionelle Landwirtschaft als auch die biologische Landwirtschaft, wobei biologische Anbauformen eine wesentlich intensivere Anwendung von natürlichen, nicht synthetisierten, Pflanzenschutzmitteln erfordern.

Die Ausbringung von Pflanzenschutzmitteln erfolgt in der Regel mit Sprühgeräten. Am Markt sind Sprühgeräte unterschiedlicher Ausführungsformen, von kleinen handgetragenen Geräten über spezifisch für diesen Anwendungszweck konstruierten, fahr- oder ziehbaren bis hin zu selbst angetriebenen Maschinen verfügbar. Im Speziellen auf dem Gebiet des Obst- und Weinbaus werden Pflanzenschutzmittel in der Regel mit Sprühgeräten ausgebracht, welche an einem landwirtschaftlichen Fahrzeug, typischerweise einem Traktor, angebracht, oder von diesem nachgezogen werden. Derartige Sprühgeräte erzeugen aus dem Pflanzenschutzmittel bzw. der Pflanzenschutzbrühe einen Sprühnebel, welcher auf die Pflanzen aufgesprüht wird. Hierbei wird der Sprühnebel in der Regel im Wesentlichen normal auf eine Fortbewegungsrichtung des Sprühgeräts beziehungsweise des Fahrzeuges ausgestoßen. Allerdings bleibt nur ein Teil der Pflanzenschutzbrühe auf den zu behandelnden Pflanzen zurück, da ein Großteil des Sprühnebels durch unvermeidbare Luftbewegungen beziehungsweise Windeinwirkungen abdriftet. Hierdurch wird ein großer Anteil der eingesetzten Pflanzenschutzbrühe verschwendet. Dies führt außerdem dazu, dass sich Pflanzenschutzbrühe auf Pflanzen in der Umgebung, beispielsweise auf Nachbargrundstücken, absetzt, welche nicht für eine Behandlung mit Pflanzenschutzbrühe vorgesehen sind. Das Weiteren entstehen hierdurch potentielle Gesundheitsrisiken für Menschen und Tiere, welche sich in der Nähe von besprühten Pflanzen aufhalten und hohen Konzentrationen des eingesetzten Pflanzenschutzmittels ausgesetzt werden. Dies ist insbesondere beim Einsatz von synthetischen Pestiziden aufgrund von mit diesen Substanzen verbundenen Gesundheitsrisiken zu vermeiden. In Folge dessen ist insbesondere im Umfeld von Wohnsiedlungen oder öffentlichen Einrichtungen eine Ausbringung von Pflanzenschutzmitteln mit herkömmlichen Sprühgeräten problematisch. Des Weiteren eignen sich herkömmliche Sprühgeräte nur zur Besprühung jeweils einer Seite von zwei angrenzenden Pflanzenreihen, wodurch jede Pflanzenreihe zumindest zweimal mit einem herkömmlichen Sprühgerät behandelt werden muss. Dies führt dazu, dass das Ausbringen von Pflanzenschutzbrühe mit einem hohen Zeitaufwand verbunden ist, und die Menge an verschwendeter Pflanzenschutzbrühe zusätzlich erhöht wird.

Zur Behebung dieser Nachteile sind sogenannte Tunnelsprühgeräte bekannt, welche die zu behandelnden Pflanzen in einem Sprühtunnel umschließen, in welchem die Pflanzenschutzbrühe aufgebracht wird. Hierdurch wird ein Abdriften des Sprühnebels effektiv verhindert, und die Pflanzen werden von zwei Seiten gleichzeitig besprüht. Des Weiteren setzt sich überschüssiger Sprühnebel in Form von flüssiger Pflanzenschutzbrühe an den Wänden bzw. Auffangschirmen des Sprühtunnels ab und kann in weiterer Folge wiederverwendet werden. Hierdurch erhöht sich die Ausbeute der eingesetzten Pflanzenschutzbrühe. Nachteile derartiger Tunnelsprühgeräte resultieren aus der Komplexität ihres Aufbaus und dem sich daraus ergebenden Platzbedarf, ihrem Gewicht und den Konstruktions- bzw. Beschaffungskosten. Das hohe Gewicht derartiger Vorrichtungen verursacht beispielsweise eine unerwünschte Bodenverdichtung zwischen den behandelten Pflanzen, welche deren Wachstum und in weiterer Folge den Ertrag negativ beeinflusst. Des Weiteren ergibt sich durch die großen Abmessungen von Tunnelsprühgeräten ein erhöhter Platzbedarf, insbesondere für Wendemanöver. Hierdurch eignen sind derartige Tunnelsprühgeräte nicht für den Einsatz in schwerem Gelände, wie beispielsweise auf Weingärten in Hanglage. Darüber hinaus ist eine Anschaffung eines Tunnelsprühgerätes für kleinere landwirtschaftliche Betriebe oftmals wirtschaftlich nicht sinnvoll, sodass diese auf herkömmliche Sprühgeräte mit einem hohen Verbrauch an Pflanzenschutzmitteln und den weiteren mit diesen Systemen einhergehenden Nachteilen zurückgreifen. Manche Tunnelsprühgeräte weisen zur Reduktion des Platzbedarfs bei Wendemanövern einen Hebe- und/oder Kippmechanismus auf, welcher mit den Auffangschirmen des Sprühtunnels verbunden ist. Dieser stellt die Funktion bereit, die Auffangschirme für ein Wendemanöver über die Bewuchshöhe der Pflanzen anzuheben oder zu kippen, wodurch ein kleinerer Wenderadius erreicht wird. Derartige Kippmechanismen weisen jedoch den Nachteil auf, dass hierdurch das Gewicht von Tunnelsprühgeräten weiter erhöht wird. Zudem erhöhen diese zusätzlich die Konstruktions- bzw. die Beschaffungskosten der Tunnelsprühgeräte. Aufgrund des hohen Gewichts und Platzbedarfs von Tunnelsprühgeräten ist deren Einsatzgebiet im Wesentlichen auf ebene Lagen beschränkt.

Das Dokument FR 3 001 159 B1 offenbart ein Tunnelsprühgerät mit einem Sprühtunnel, welches im Vergleich zu herkömmlichen Tunnelsprühgeräten ein reduziertes Gewicht aufweist. Die Auffangschirme des Sprühtunnels des Tunnelsprühgeräts sind mit einer Tragestruktur verbunden, welche zumindest teilweise aus einer Aufblasstruktur besteht. Hierdurch wird ein Teil der in der Regel aus Metall gefertigten Struktur des Tunnelsprühgeräts durch eine leichtere alternative Konstruktion ersetzt. Dies führt zu einer Reduktion des Gewichts des Tunnelsprühgerätes im Vergleich zu herkömmlichen Tunnelsprühgeräten.

Das in Dokument FR 3 001 159 B1 offenbarte Tunnelsprühgerät weist den bekannten Nachteil auf, dass insbesondere bei Wendemanövern ein hoher Platzbedarf besteht und es sich hierdurch schlecht für die Anwendung in schwerem Gelände oder bei beengten Platzverhältnissen eignet. Ein zusätzlicher Kippmechanismus würde das Gewicht der Vorrichtung wiederum erhöhen.

Das Dokument US 6,302,332 B1 offenbart ein Sprühgerät mit einer Tragestruktur, einer Aufblasstruktur und Sprühdüsen, welche an der Aufblasstruktur vorgesehen sind. Die Tragestruktur ist aus Metall gefertigt, und die Aufblasstruktur ist starr an der Tragestruktur befestigt. Das in US 6,302,332 B1 offenbarte Sprühgerät weist ebenfalls die Nachteile eines hohen Platzbedarfs und einer daraus folgenden schlechten Eignung für Anwendungen im Gelände auf.

Es ist die Aufgabe der vorliegenden Erfindung eine Vorrichtung zur Vermeidung von Sprühnebelabdrift und/oder zum Auffangen und Recyceln von Pflanzenschutzbrühe zu bilden, welche die Nachteile des Standes der Technik vermeidet.

Erfindungsgemäß wird die vorliegende Aufgabe dadurch gelöst, dass ein pneumatisches Gelenk mit einer Hebestruktur vorgesehen ist, und der Auffangschirm und/oder die Sprühdüsen von dem pneumatischen Gelenk zwischen einer Auffangbetriebslage, zum Auffangen der Pflanzenschutzbrühe, beziehungsweise einer Sprühbetriebslage, zum Sprühen der Pflanzenschutzbrühe, und einer Wendebetriebslage, mit zur Auffangbetriebslage angehobenem Auffangschirm beziehungsweise zur Sprühbetriebslage angehobenen Sprühdüsen, schwenkbar gelagert ist.

Die erfindungsgemäße Vorrichtung zur Vermeidung von Sprühnebelabdrift und/oder zum Auffangen und Recyceln von Pflanzenschutzbrühe umfasst eine Tragestruktur, einen mit der Tragestruktur verbundenen Auffangschirm zum Auffangen von Pflanzenschutzbrühe und/oder mit der Tragstruktur verbundene Sprühdüsen zum Sprühen von Planzenschutzbrühe. Die Tragestruktur besteht zumindest teilweise aus einer Aufblasstruktur, und der Auffangschirm und/oder die Sprühdüsen sind an der Aufblasstruktur befestigt. An der Aufblasstruktur können ein Auffangschirm, eine oder mehrere Sprühdüsen oder sowohl ein Auffangschirm als auch eine oder mehrere Sprühdüsen vorgesehen sein. Hierdurch wird der Vorteil erreicht, dass das Gewicht der Vorrichtung im Vergleich zu herkömmlichen Vorrichtungen wesentlich verringert wird. Die erfindungsgemäße Vorrichtung weist des Weiteren ein pneumatisches Gelenk auf, welches eine Hebestruktur umfasst. Der Auffangschirm und/oder die Sprühdüsen sind von dem pneumatischen Gelenk zwischen einer Auffangbetriebslage zum Auffangen der Pflanzenschutzbrühe beziehungsweise einer Sprühbetriebslage zum Sprühen der Pflanzenschutzbrühe und einer Wendebetriebslage mit zur Auffangbetriebslage angehobenem Auffangschirm, beziehungsweise zur Sprühbetriebslage angehobenen Sprühdüsen schwenkbar gelagert. Durch die Ausführung der Tragestruktur zumindest teilweise als Aufblasstruktur wird die Möglichkeit geschaffen, die Aufblasstruktur mittels der Hebestruktur zu verformen, wodurch eine Schwenkbewegung des pneumatischen Gelenks eingeleitet wird. Hierbei wird die Aufblasstruktur durch die Hebestruktur bei einem Schwenken des Auffangschirms beziehungsweise der Sprühdüsen in die Wendebetriebslage verformt. Hierdurch wird der Vorteil erreicht, dass eine Schwenkfunktion des Auffangschirms und/oder der Sprühdüsen bereitgestellt wird, ohne Verwendung eines vollständig aus Metall, Hartplastik, Holz, oder ähnlichen steifen und vergleichbar schweren Materialien gefertigten Gelenks. Hierdurch wird der Vorteil erreicht, dass das Systemgewicht der erfindungsgemäßen Vorrichtung wesentlich reduziert wird. Besonders vorteilhaft ist, dass durch das pneumatische Gelenk unterschiedliche Schwenkwinkel bereitgestellt werden, um die Vorrichtung an unterschiedliche Geländegegebenheiten und Bewuchshöhen anzupassen. Hierdurch eignet sich die erfindungsgemäße Vorrichtung sowohl für den Einsatz in schwierigem Gelände oder Steillagen mit beschränkten Platzverhältnissen für Wendemanöver, wie beispielsweise in Weinkulturen, als auch für Obstbaumplantagen in der Ebene. Zudem kann die erfindungsgemäße Vorrichtung in Verbindung mit bestehenden herkömmlichen Sprühgeräten eingesetzt werden. Sie eignet sich somit insbesondere als Ersatz für kostspielige Tunnelsprühgeräte. Besonders vorteilhaft ist, dass hierdurch die Sprühnebelabdrift von herkömmlichen Sprühgeräten wesentlich verringert werden kann, oder bei einer Ausführung der erfindungsgemäßen Vorrichtung mit Sprühdüsen die notwendige Arbeitszeit zur Besprühung einer Nutzpflanzenkultur wesentlich reduziert werden kann. Des Weiteren erweitert die erfindungsgemäße Vorrichtung das Einsatzgebiet von herkömmlichen Sprühgeräten, durch die Möglichkeit der Reduzierung der Sprühnebelabdrift und/oder der verringerten notwendigen Arbeitszeit, auf sensible Gebiete, wie beispielsweise in der Nähe von Siedlungen. Des Weiteren reduziert die erfindungsgemäße Vorrichtung den Bodeneintrag von Pflanzenschutzmitteln, wodurch die Grundwasserbelastung reduziert wird. Durch das geringere Gewicht der Vorrichtung im Vergleich zu Vorrichtungen aus dem Stand der Technik wird zudem der Vorteil erreicht, dass die Bodenverdichtung reduziert wird.

Vorteilhafte Ausgestaltungen der erfindungsgemäßen Vorrichtung, sowie alternativer Ausführungsvarianten werden in weiterer Folge anhand der Figuren näher erläutert.
Figur 1 zeigt eine erfindungsgemäße Vorrichtung zur Vermeidung von Sprühnebelabdrift und/oder zum Auffangen und Recyceln von Pflanzenschutzbrühe mit einem Auffangschirm in einer schematischen Seitenansicht.
Figur 2 zeigt die erfindungsgemäße Vorrichtung gemäß Figur 1 in einer schematischen Grundrissansicht, wobei Auffangsstruktur und Hebestruktur nur einseitig abgebildet sind.
Figur 3 zeigt zwei gegenüberliegende erfindungsgemäße Vorrichtungen in einer Ansicht von Hinten mit einem Sprühgerät, und zwei Auffangschirmen mit Sprühdüsen.
Figur 4 zeigt die erfindungsgemäßen Vorrichtungen aus Figur 3 mit einem Auffangschirm in zwei verschiedenen Betriebsvarianten einer Wendebetriebslage und einem Auffangschirm und Sprühdüsen in einer Auffangbetriebslage beziehungsweise Sprühbetriebslage.
Figur 5 zeigt eine alternative Ausführungsvariante der erfindungsgemäßen Vorrichtung mit einem Auffangschirm und Sprühdüsen.
Figur 6 zeigt ein landwirtschaftliches Fahrzeug in einer Seitenansicht mit einem Sprühgerät, und der erfindungsgemäßen Vorrichtung.

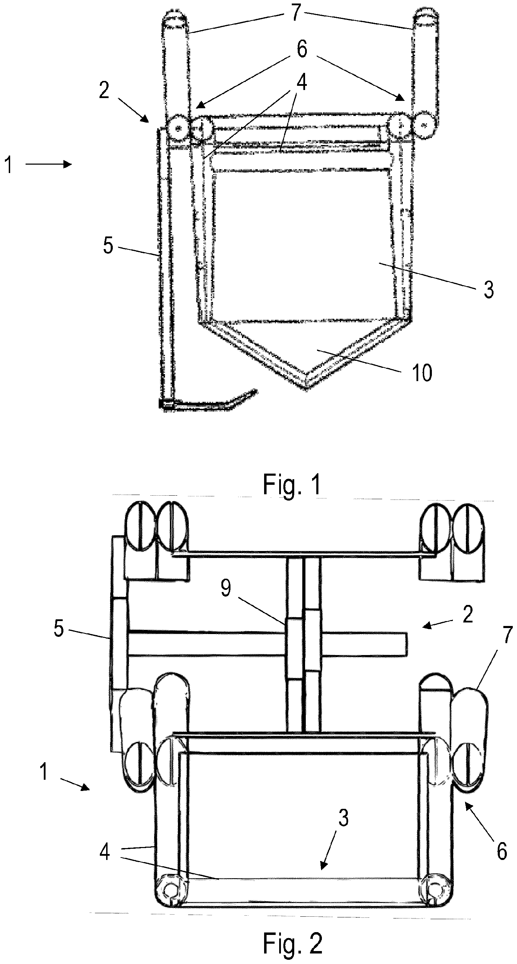

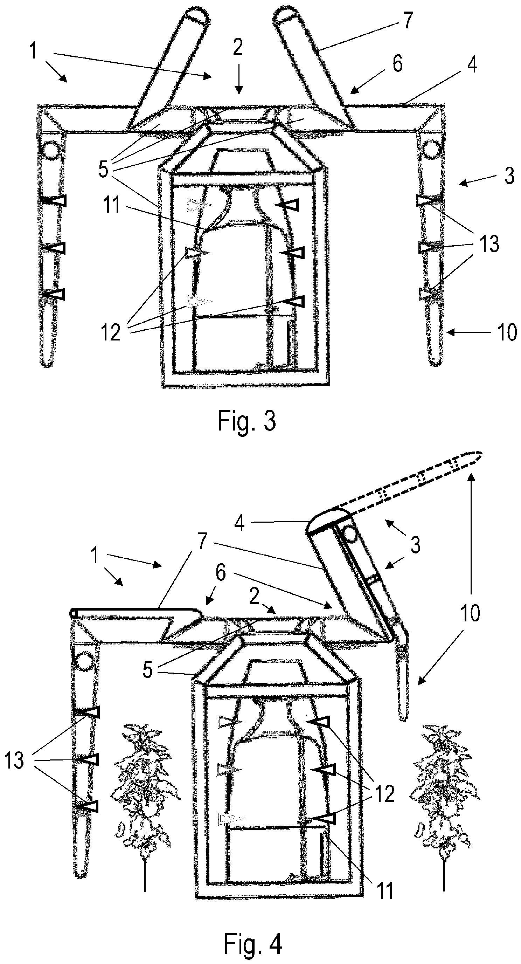

Figur 1 zeigt die erfindungsgemäße Vorrichtung 1 zur Vermeidung von Sprühnebelabdrift und/oder zum Auffangen und Recyceln von Pflanzenschutzbrühe in einer schematischen Seitenansicht mit einer Tragestruktur 2 und einem Auffangschirm 3, welcher mit der Tragestruktur 2 verbunden ist. Die erfindungsgemäße Vorrichtung 1 kann anstatt des, oder zusätzlich zu dem Auffangschirm 3 in Figur 3 und Figur 4 dargestellte Sprühdüsen 13 umfassen, welche mit der Tragestruktur 2 verbunden sind. Die Tragestruktur 2 besteht zumindest teilweise aus einer Aufblasstruktur 4, die beispielsweise aus einem Kunststoff ähnlich einer aufblasbaren verstärkten Luftmatratze mit zum Beispiel einer Luftkammer gebildet sein kann. Des Weiteren umfasst die Tragestruktur 2 in der in Figur 1 dargestellten bevorzugten Ausführungsvariante eine stabile, beispielsweise aus Metall gefertigte Befestigungsstruktur 5. Der Auffangschirm 3 und/ oder die Sprühdüsen 13 sind an der Aufblasstruktur 4 befestigt. Der Auffangschirm 3 kann beispielsweise in Form einer Kunststofffolie bereitgestellt sein. Sind nur Sprühdüsen 13 und kein Auffangschirm 3 an der erfindungsgemäßen Vorrichtung 1 vorgesehen, dann wird die Aufblasstruktur 4 gemäß einer Ausführungsvariante nicht als geschlossener Rahmen ausgeführt, sondern umfasst nur einen oder mehrere Balken, an welchem oder an welchen die Sprühdüsen 13 befestigt sind.

Die in Figur 1 dargestellte erfindungsgemäße Vorrichtung 1 umfasst je Seite ein pneumatisches Gelenk 6 mit einer Hebestruktur 7. Als pneumatisches Gelenk 6 wird im Rahmen dieser Beschreibung der erfindungsgemäßen Vorrichtung 1 ein durch lokales Abknicken der Aufblasstruktur 4 realisiertes Gelenk angesehen, und nicht ein herkömmliches, mechanisches Gelenk, welches in der Regel durch eine Nabe und eine Achse gebildet ist. Der Auffangschirm 3 und/oder die Sprühdüsen 13 sind an dem pneumatischen Gelenk 6 zwischen einer, in den Figuren 1 bis 3, 5 und 6 dargestellten Auffangbetriebslage beziehungsweise Sprühbetriebslage und einer in Figur 4 auf der rechten Seite dargestellten Wendebetriebslage schwenkbar gelagert. In der Auffangbetriebslage ist der Auffangschirm 3 zum Auffangen der Pflanzenschutzbrühe positioniert. In der Sprühbetriebslage sind die Sprühdüsen 13 zum Sprühen der Pflanzenschutzbrühe positioniert. In der Wendebetriebslage sind der Auffangschirm 3 und/oder die Sprühdüsen 13 in Relation zur Auffangbetriebslage beziehungsweise Sprühbetriebslage angehoben. In der Auffangbetriebslage ist der Auffangschirm 3 beispielsweise Normal auf eine Ausbringungsrichtung der Pflanzenschutzbrühe angeordnet. In der Wendebetriebslage sind der Auffangschirm 3 und/oder die Sprühdüsen 13 mittels des pneumatischen Gelenks 6 angehoben positioniert, sodass der Auffangschirm 3 und/oder die Sprühdüsen 13 im Wesentlichen vollständig über einer Bewuchshöhe von zu besprühenden Pflanzen angehoben sind. Auf der rechten Seite der Figur 4 ist beispielhaft ein Auffangschirm 3 der erfindungsgemäßen Vorrichtung 1 in Wendebetriebslage dargestellt. Figur 4 zeigt zwei verschiedene Ausführungsvarianten der Wendebetriebslage, wobei in der Regel die strichliert dargestellte Positionierung des Auffangschirms 3 die bevorzugte Ausführungsvariante der Wendebetriebslage darstellt. Hierdurch wird der Vorteil erreicht, dass die Vorrichtung 1 einen geringen Platzbedarf für Wendemanöver aufweist. Die in Figur 4 nicht strichliert, sondern mit durchgehenden Linien dargestellte Betriebsvariante der Wendebetriebslage wird durch ein Druckablassen beziehungsweise zusätzliches Druckablassen aus der Aufblasstruktur 4 erreicht.

Gemäß einer Ausführungsvariante umfasst die Hebestruktur 7 einen mit der Aufblasstruktur 4 verbundenen Aktor, anstatt eines aufblasbaren Aktors, welcher in den Figuren nicht dargestellt ist. Dieser Aktor ist dazu ausgebildet die Aufblasstruktur 4 in der Wendebetriebslage zu verformen. Dieser Aktor kann beispielsweise einen Seilzug, einen Gummizug oder ein Gestänge umfassen. Der Seilzug oder das Gestänge sind vorzugsweise von einem Elektromotor, einem Hydraulikzylinder oder Ähnlichem angetrieben. Weitere Ausführungsmöglichkeiten von Aktoren sind dem Fachmann auf dem Gebiet des Maschinenbaus allgemein bekannt. Hierdurch wird der Vorteil bereitgestellt, dass ein besonders einfach zu konstruierendes, verlässliches und mit am Markt in großen Stückzahlen verfügbaren Komponenten aufgebautes pneumatisches Gelenk 6 bereitgestellt wird. Umfasst der Aktor einen Gummizug wird die Aufblasstruktur 4 bei einer Reduktion eines Drucks in der Aufblasstruktur 4 durch eine mittels einer Vorspannung des Gummizugs aufgebrachten Kraft verformt. Zur Regelung des Drucks in der Aufblasstruktur 4 kann zusätzlich eine Druckeinrichtung, wie beispielsweise ein steuerbares Ventil, ein Kompressor oder ein Druckreservoir vorgesehen sein. Hierdurch werden der Auffangschirm 3 beziehungsweise die Sprühdüsen 13 von der Auffangbetriebslage beziehungsweise der Sprühbetriebslage in die Wendebetriebslage geschwenkt. Bei einer Erhöhung des Drucks in der Aufblasstruktur 4 nimmt die Aufblasstruktur 4 wiederum ihre ursprüngliche Form an und der Auffangschirm 3 beziehungsweise die Sprühdüsen 13 schwenken in die Sprühbetriebslage beziehungsweise die Auffangbetriebslage. Hierdurch wird ein besonders simpel aufgebautes, kostengünstiges und widerstandsfähiges pneumatisches Gelenk 6 bereitgestellt. Der Gummizug kann ebenfalls wie oben beschrieben angetrieben sein.

Gemäß der bevorzugten Ausführungsvariante der Vorrichtung 1 ist die Hebestruktur 7 aufblasbar, wobei die Aufblasstruktur 4 und die Hebestruktur 7 als aufblasbare Formkörper bereitgestellt sind. Das pneumatisches Gelenk 6 basiert in einer bevorzugten Ausführungsvariante auf einer veränderbaren Steifigkeit der Aufblasstruktur 4 und/oder der Hebestruktur 7. Entweder werden die Steifigkeiten der Aufblasstruktur 4 oder der Hebestruktur 7 verändert, oder es werden die Steifigkeiten sowohl der Aufblasstruktur 4 als auch der Hebestruktur 7 verändert.

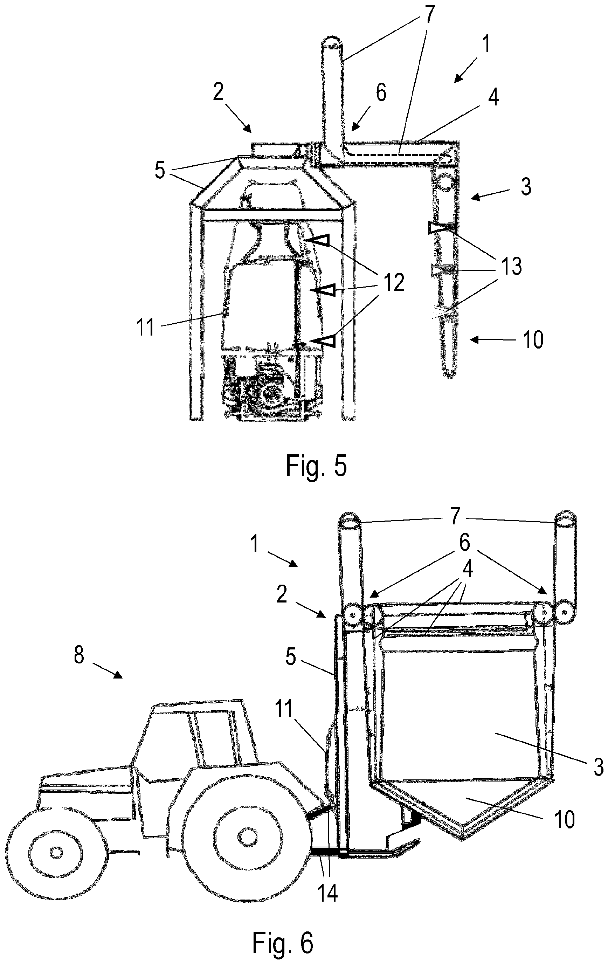

Die Hebestruktur 7 hebt sich in einer bevorzugten Ausführungsvariante, wie in Figur 3 dargestellt, in einem aufgeblasenen Zustand ausgehend von der Befestigungsstruktur 5 beziehungsweise der Tragestruktur 2 in einem spitzen, stumpfen oder rechten Winkel von der Aufblasstruktur 4 ab. Die Hebestruktur 7 ist mit dem Auffangschirm 3 direkt oder indirekt über die Aufblasstruktur 4 an einem der Befestigungsstruktur 5 gegenüberliegenden Ende verbunden. In den Figuren 1 bis 3, 5 und 6 ist sowohl die Aufblasstruktur 4 als auch die Hebestruktur 7 im aufgeblasenen Zustand und nicht miteinander verbunden dargestellt. Hierbei ist die Hebestruktur 7 nur für Verständniszwecke, und um die Verläufe der beiden Strukturen zu illustrieren von der Aufblasstruktur 4 abgehoben dargestellt. In Figur 4 sind zwei gegenüberliegende Vorrichtungen 1 mit zwei Auffangschirmen 3 sowie beidseitig angeordneten Sprühdüsen 13 dargestellt. Des Weiteren ist ein Sprühgerät 11 dargestellt, welches Sprühgerätdüsen 12 zum Sprühen von Pflanzenschutzbrühe aufweist. Im Betrieb, ist die Hebestruktur 7, wie in Figur 4 dargestellt, direkt oder indirekt mit der Aufblasstruktur 4 an einem der Befestigungsstruktur 5 gegenüberliegenden Ende verbunden. Hierbei befindet sich das pneumatische Gelenk 6 entweder in der Auffangbetriebslage beziehungsweise der Sprühbetriebslage, wie auf der linken Seite in Figur 4 dargestellt, oder in der Wendebetriebslage, welche auf der rechten Seite in Figur 4 dargestellt ist. In der Auffangbetriebslage beziehungsweise der Sprühbetriebslage ist in der bevorzugten Ausführungsvariante der Vorrichtung 1 durch eine geringere Steifigkeit der Hebestruktur 7, im Vergleich zur Aufblasstruktur 4, der Verlauf der Hebestruktur 7 durch den Verlauf der Aufblasstruktur 4 bestimmt. In der Wendebetriebslage ist durch eine im Vergleich zur Hebestruktur 7 geringere Steifigkeit der Aufblasstruktur 4 der Verlauf der Aufblasstruktur 4 durch den Verlauf der Hebestruktur 7 bestimmt. Hierdurch wir der Vorteil erreicht, dass ein simples, verlässliches, und vor allem leichtes pneumatisches Gelenk 6 bereitgestellt wird, welches das Gewicht der Vorrichtung 1 nur in einem geringen Umfang erhöht. Die erfindungsgemäße Vorrichtung 1 weist hierdurch im Vergleich zu Vorrichtungen gemäß dem Stand der Technik ein wesentlich geringeres Gewicht auf. Aufgrund dessen eignet sich die erfindungsgemäße Vorrichtung 1 sowohl für den Einsatz in schwerem Gelände als auch für den Einsatz bei beengten Platzverhältnissen. Je nach Dimensionierung der erfindungsgemäßen Vorrichtung 1 ist beispielsweise ein Vorgewende von 3m für einen Wendevorgang ausreichend. Besonders vorteilhaft ist, dass die Vorrichtung 1 im Vergleich zum Stand der Technik mit einem, in Figur 6 dargestellten, Fahrzeug 8 mit eingeschränkter Zugleistung oder Tragleistung eingesetzt werden kann.

Gemäß einer Ausführungsvariante der erfindungsgemäßen Vorrichtung 1 weist das pneumatische Gelenk 6 eine in den Figuren nicht dargestellte Druckeinrichtung zur Änderung des Drucks, insbesondere des Luftdrucks entweder in der Hebestruktur 7 und/oder in der Aufblasstruktur 4, oder zur Änderung des Luftdrucks sowohl in der Hebestruktur 7 als auch in der Aufblasstruktur 4 auf. Alternativ können die Hebestruktur 7 und die Aufblasstruktur 4 mit jedem anderen geeigneten Gas gefüllt sein. Die Druckeinrichtung kann beispielsweise in Form eines Kompressors oder eines Druckreservoirs bereitgestellt sein. Das pneumatische Gelenk 6 schwenkt den Auffangschirm 3 und/oder die Sprühdüsen 13 durch Erhöhung des Drucks in der Hebestruktur 7 von der Auffangbetriebslage beziehungsweise der Sprühbetriebslage in die Wendebetriebslage. Gemäß einer alternativen Ausführungsvariante der erfindungsgemäßen Vorrichtung 1 wird hierbei auch der Druck in der Aufblasstruktur 4 vermindert. Durch die beschriebene Änderung der Druckverhältnisse in dem pneumatischen Gelenk 6 wird die Steifigkeit der Hebestruktur 7 erhöht und gegebenenfalls die Steifigkeit der Aufblasstruktur 4 verringert. Alternativ wird die Steifigkeit der Aufblasstruktur 4 variiert und jene der Hebestruktur 7 konstant gehalten. Der Verlauf der Aufblasstruktur 4 wird in der Wendebetriebslage durch den Verlauf der Hebestruktur 7 bestimmt. Hierdurch wird der Vorteil erreicht, dass die Bewegung des pneumatischen Gelenks 6 vollständig ohne bewegte mechanische Elemente wie beispielsweise Roll- oder Gleitlager realisiert wird. Hierdurch wird das Gewicht der erfindungsgemäßen Vorrichtung 1 weiter reduziert. Das pneumatische Gelenk 6 schwenkt des Weiteren durch Verminderung des Drucks in der Hebestruktur 7 und gegebenenfalls Erhöhung des Drucks in der Aufblasstruktur 4 den Auffangschirm 3 und/oder die Sprühdüsen 13 von der Wendebetriebslage in die Auffangbetriebslage beziehungsweise in die Sprühbetriebslage. Durch diese Veränderung der Druckverhältnisse wird die Steifigkeit der Aufblasstruktur 4 gegebenenfalls erhöht und die Steifigkeit der Hebestruktur 7 verringert. Der Verlauf der Hebestruktur 7 wird in Folge dessen in der Auffangbetriebslage durch den Verlauf der Auffangstruktur 4 bestimmt. Hierdurch wird der Vorteil erreicht, dass durch eine einfache Umkehr der Druckverhältnisse eine erneute Absenkung des Auffangschirms 3 in von der Wendebetriebslage in die Auffangbetriebslage realisiert wird. In der in Figur 4 mit durchgezogenen Linien dargestellten Ausführungsvariante der Wendebetriebslage wurde der Druck in der Aufblasstruktur 4 abgesenkt. Hierdurch erschlafft die Aufblasstruktur 4. Im Betrieb der erfindungsgemäßen Vorrichtung 1 wird der Druck in der Aufblasstruktur 4, wie in Figur 4 strichliert dargestellt, in der Regel nicht, oder nur teilweise reduziert, sodass sich die Aufblasstruktur 4 mit dem daran befestigten Auffangschirm 3 und/oder den daran befestigten Sprühdüsen 13 in einem Winkel von der Hebestruktur 7 abhebt. Mittels einer Steuerung des Drucks in der Aufblasstruktur 4 durch die Druckeinrichtung kann gemäß einer alternativen Ausführungsvariante der erfindungsgemäßen Vorrichtung 1 der Winkel zwischen der Aufblasstruktur 4 und der Hebestruktur 7 in der Wendebetriebslage beeinflusst werden. Wie in Figur 4 dargestellt, kann eine Druckeinrichtung die Aufblasstruktur 4 und die Hebestruktur 7 von zwei gegenüberliegenden Vorrichtungen 1 unabhängig voneinander steuern.

Gemäß einer alternativen Ausführungsvariante umfasst das pneumatische Gelenk 6 eine, in den Figuren nicht dargestellte, Einschnüreinheit. Die Einschnüreinheit schnürt den aufgeblasenen Querschnitt der Aufblasstruktur 4 ein. Schnürt die Einschnüreinheit den aufgeblasenen Querschnitt der Aufblasstruktur 4 ein, wird die Steifigkeit der Aufblasstruktur 4 im Vergleich zur Hebestruktur 7 reduziert. Der Verlauf der Aufblasstruktur 4 wird aufgrund dessen durch den Verlauf der Hebestruktur 7 bestimmt, welche gemäß einer Ausführungsvariante der erfindungsgemäßen Vorrichtung 1 aufblasbar ist. In einer alternativen Ausführungsvariante kann die Hebestruktur 7 durch eine mechanische Vorrichtung, wie beispielsweise einen Seilzug oder ein Gestänge bereitgestellt sein, welches den Verlauf der eingeschnürten Aufblasstruktur 4 bestimmt, und/oder eine Kraft auf die eingeschnürte Aufblasstruktur 4 aufbringt. Durch Einschnüren der Aufblasstruktur 4 schwenkt das pneumatische Gelenk 6 den Auffangschirm 3 und/oder die Sprühdüsen 13 von der Auffangbetriebslage beziehungsweise der Sprühbetriebslage in die Wendebetriebslage. Gemäß einer alternativen Ausführungsvariante der erfindungsgemäßen Vorrichtung 1 schnürt die Einschnüreinheit den aufgeblasenen Querschnitt der Hebestruktur 7 ein. Schnürt die Einschnüreinheit den aufgeblasenen Querschnitt der Hebestruktur 7 ein, wird die Steifigkeit der Hebestruktur 7 im Vergleich zur Aufblasstruktur 4 reduziert. Der Verlauf der Hebestruktur 7 wird aufgrund dessen durch den Verlauf der Aufblasstruktur 4 bestimmt. Durch Einschnüren der Hebestruktur 7 schwenkt das pneumatische Gelenk 6 den Auffangschirm 3 und/oder die Sprühdüsen 13 von der Wendebetriebslage in die Auffangbetriebslage beziehungsweise die Sprühbetriebslage. In einer weiteren alternativen Ausführungsvariante der erfindungsgemäßen Vorrichtung 1 schnürt die Einschnüreinheit den aufgeblasenen Querschnitt der Hebestruktur 7 und der Aufblasstruktur 4 selektiv ein. Hierbei schürt die Einschnüreinheit entweder den aufgeblasenen Querschnitt der Aufblasstruktur 4 oder den aufgeblasenen Querschnitt der Hebestruktur 7 ein. Durch Einschnüren der Hebestruktur 7 oder der Aufblasstruktur 4 schwenkt das pneumatische Gelenk 6 den Auffangschirm 3 und/oder die Sprühdüsen 13 zwischen der Auffangbetriebslage beziehungsweise der Sprühbetriebslage und der Wendebetriebslage. Die Einschnüreinheit kann beispielsweise als ein oder zwei mit einem oder zwei Stellmotoren verbundene Seilzüge realisiert sein, welche je nach Ausführungsvariante um die Aufblasstruktur 4 und/oder die Hebestruktur 7 geführt sind. Hierdurch wird der Vorteil erreicht, dass eine besonders einfache Methode zur Veränderung der Steifigkeit der Hebestruktur 7 und der Auffangstruktur 4 bereitgestellt wird, welche ohne eine unmittelbare Änderung der Druckverhältnisse realisiert wird.

Es kann in der erfindungsgemäßen Vorrichtung 1 auch die Einschnüreinheit durch eine Eindrückeinheit ersetzt sein, welche in den Figuren nicht dargestellt ist. Die Eindrückeinheit drückt hierbei den aufgeblasenen Querschnitt der Aufblasstruktur 4, der Hebestruktur 7 oder der Aufblasstruktur 4 und der Hebestruktur 7 ein, wodurch analog zur Einschnüreinheit eine Änderung der Steifigkeit der Aufblasstruktur 4 oder der Hebestruktur 7 bewirkt wird. Die Eindrückeinheit kann beispielsweise durch einen Hydraulikzylinder gebildet sein. Gemäß einer alternativen Ausführungsvariante ist die Eindrückeinheit ebenfalls aufblasbar, und liegt beispielsweise als aufblasbarer Formkörper vor. Beispielsweise bewirkt ein Eindrücken der Aufblasstruktur 4, dass das pneumatische Gelenk 6 um einen Winkel von im Wesentlichen 45° abknickt. Gemäß einer Ausführungsvariante der erfindungsgemäßen Vorrichtung 1 ist die Hebestruktur 7 aufblasbar. In einer alternativen Ausführungsvariante kann die Hebestruktur 7 durch eine mechanische Vorrichtung, wie beispielsweise einen Seilzug oder ein Gestänge bereitgestellt sein, welches den Verlauf der eingedrückten Aufblasstruktur 4 bestimmt, und/oder eine Kraft auf die eingedrückte Aufblasstruktur 4 aufbringt.

In den Figuren 1 bis 4 und 6 sind die Aufblasstruktur 4 und die Hebestruktur 7 als zwei verschiedene aufblasbare Formkörper dargestellt, welche im Betrieb aneinander anliegend positioniert sind. Gemäß einer in Figur 5 dargestellten Ausführungsvariante der erfindungsgemäßen Vorrichtung 1 ist die Hebestruktur 7 von der Aufblasstruktur 4 zumindest teilweise umschlossen. Die Hebestruktur 7 liegt in dieser Ausführungsvariante abschnittsweise innerhalb der Aufblasstruktur 4, und führt aus dem Inneren der Aufblasstruktur 4 nach außen. Gemäß einer alternativen Ausführungsvariante ist die Aufblasstruktur 4 zumindest teilweise von der Hebestruktur 7 umschlossen. Hierdurch wird der Vorteil erreicht, dass der Platzbedarf des pneumatischen Gelenks 6 wesentlich reduziert wird. Gemäß einer weiteren Ausführungsvariante liegt die Hebestruktur 7 im Wesentlichen vollständig innerhalb der Aufblasstruktur 4, wie in Figur 5 mit strichlierten Linien dargestellt, wobei die Hebestruktur 7 hierbei in einem Zustand mit abgelassenen Druck gezeigt ist.

Wie in Figur 2 dargestellt weist die Tragestruktur 2 gemäß der bevorzugten Ausführungsvariante der erfindungsgemäßen Vorrichtung 1 eine Verschubeinheit 9 auf. Die Verschubeinheit 9 verschiebt die Aufblasstruktur 4 mit dem daran befestigten Auffangschirm 3 und/oder den daran befestigten Sprühdüsen 13 im Wesentlichen quer zur Ausdehnung des Auffangschirms 3 beziehungsweis im Wesentlichen in Richtung der Sprühdüsen 13. Hierdurch wird der Vorteil erreicht, dass die Vorrichtung 1 im Weinbau sowohl an verschiedene Reihenweiten der Rebzeile als auch im Obstbau bei Spindelkulturen (Kern- und Beerenobst) eingesetzt werden kann. Die Verschubeinheit 9 umfasst in der bevorzugten Ausführungsvariante der erfindungsgemäßen Vorrichtung 1 einen Linearaktuator. Hierdurch wird der Vorteil erreicht, dass ein besonders widerstandsfähiger und leicht verfügbarer Bauteil für die Verschubeinheit 9 eingesetzt werden kann. Die in Figur 2 dargestellte Ausführungsvariante der erfindungsgemäßen Vorrichtung 1 weist zudem eine Vorbereitung für einen zweiten Auffangschirm 3 beziehungsweise Sprühdüsen 13 auf, welche an einer zweiten Aufblasstruktur 4 befestigt sind.

Gemäß der bevorzugten Ausführungsvariante umfasst der Auffangschirm 3 einen Auffangsumpf 10 an einem unteren Ende des Auffangschirms 3, welcher in Figur 1 dargestellt ist. Der Auffangsumpf 10 dient als Sammelstelle für auf den Auffangschirm 3 auftreffende Pflanzenschutzbrühe. Zum Recyceln der Pflanzenschutzbrühe ist der Auffangsumpf 10 mit einem, in den Figuren 3 bis 5 dargestellten, Sprühgerät 11 verbindbar, wobei die aufgefangene Pflanzenschutzbrühe, beispielsweise mit einer Förderpumpe, erneut dem Sprühgerät 11 zugeführt wird. Des Weiteren kann die aufgefangene Pflanzenschutzbrühe erneut den Sprühdüsen 13 und/oder Sprühgerätdüsen 12 zugeführt werden. Die Sprühdüsen 13 und/oder Sprühgerätdüsen 12 können gemäß einer alternativen Ausführungsvariante der erfindungsgemäßen Vorrichtung 1 von dem Sprühgerät 11 mit Pflanzenschutzbrühe versorgt werden. Hierdurch wird der Vorteil erreicht, dass die Ausbeute der Pflanzenschutzbrühe wesentlich erhöht wird.

Die erfindungsgemäße Vorrichtung 1 zur Vermeidung von Sprühnebelabdrift und/oder zum Auffangen und Recyceln von Pflanzenschutzbrühe ist Teil eines landwirtschaftlichen Fahrzeugs 8 mit einem Sprühgerät 11 zum Versprühen von Pflanzenschutzbrühe. Wie in Figur 6 dargestellt, sind Sprühgeräte 11 mit dem landwirtschaftlichen Fahrzeug 8 gekoppelt, welches die Antriebsleitung für eine Fortbewegung des Sprühgeräts 11 bereitstellt. In der in Figur 6 dargestellten Ausführungsvariante ist das Sprühgerät 11 mit einer Dreipunktkupplung 14 eines Traktors verbunden. Gemäß der bevorzugten Ausführungsvariante des landwirtschaftlichen Fahrzeugs 8 ist die erfindungsgemäße Vorrichtung 1 an der Dreipunkkupplung 14 befestigt, und mit dem Sprühgerät 11 verbunden. Das Sprühgerät 11 bringt die Pflanzenschutzbrühe mit den in Figur 6 verdeckten Sprühgerätdüsen 12 in einer Ausbringrichtung im Wesentlichen normal auf eine Fahrrichtung des Fahrzeuges 8 beziehungsweise des Traktors aus. Der Auffangschirm 3 der Vorrichtung 1 ist in der in Figur 6 dargestellten Auffangbetriebslage normal auf die Ausbringrichtung ausgerichtet. Die in Figur 6 nicht dargestellten Sprühdüsen 13 sind in der Sprühbetriebslage in der Ausbringrichtung ausgerichtet. In der Wendeposition wird, wie in Figur 4 dargestellt, der Auffangschirm 3 und/oder die Sprühdüsen 13 von dem pneumatischen Gelenk 6 mittels der Hebestruktur 7 angehoben. Hierdurch wird der Vorteil erreicht, dass herkömmliche Sprühgeräte 11 in Verbindung mit einer erfindungsgemäßen Vorrichtung 1 eingesetzt werden können. Hierdurch werden mit herkömmlichen Sprühgeräten 11 die Vorteile eines Tunnelsprühgeräts erreicht. Alternativ kann die Befestigungsstruktur 5, oder die Tragestruktur 2 der erfindungsgemäßen Vorrichtung 1 auch direkt am Sprühgerät 11 oder am Fahrzeug 8 befestigt werden. Gemäß der bevorzugten Ausführungsvariante des Fahrzeugs 8 sind zwei einander gegenüberliegende Vorrichtungen 1 zur Vermeidung von Sprühnebelabdrift und/oder zum Auffangen und Recyceln von Pflanzenschutzbrühe vorgesehen. Die Auffangschirme 3 der beiden Vorrichtungen 1 sind in dieser Ausführungsvariante beiderseits des Sprühgerätes 11 positioniert, wie in den Figuren 3 und 4 dargestellt. Hierdurch wird der Vorteil erreicht, dass zwei Reihen an Pflanzen gleichzeitig mit dem erfindungsgemäßen Fahrzeug 8 mit der erfindungsgemäßen Vorrichtung 1 besprüht werden können. Besonders vorteilhaft ist, dass hierdurch die Arbeitszeit zur Bearbeitung einer Menge an Pflanzen, durch die Bearbeitung von beispielsweise zwei Reihen von Weinreben gleichzeitig wesentlich reduziert wird.

Gemäß der bevorzugten Ausführungsvariante des Fahrzeugs 8 weist die Vorrichtung 1 eine Tragestruktur 2 auf, welche ein Nachrüsten der einen oder der beiden Vorrichtungen 1 auf dem Fahrzeug 8 mit Sprühgerät 11 ermöglicht. Die Verbindung der Tragestruktur 2 mit dem Fahrzeug 8 kann beispielsweise mittels der Dreipunkkupplung 14 eines Traktors erfolgen. Die Tragestruktur 2 verbindet das Fahrzeug 8 mit dem Sprühgerät 11 und dem Auffangschirm 3 beziehungsweise den Sprühdüsen 13. Die Tragestruktur 2 weist hierfür eine Eingriffsvorrichtung zur abnehmbaren Verbindung mit Dreipunktkupplungen 14 auf. Eingriffsvorrichtungen für Dreipunktkupplungen 14 sind dem Fachmann auf dem Gebiet der industriellen Landwirtschaft hinreichend bekannt. Alternativ kann die erfindungsgemäße Vorrichtung 1 direkt auf dem Sprühgerät 11 aufgebaut werden, oder auch als selbstfahrender Wagen gezogen werden.

Die erfindungsgemäße Vorrichtung 1 zur Vermeidung von Sprühnebelabdrift und/oder zum Auffangen und Recyceln von Pflanzenschutzbrühe erlaubt Obst- und Wienbaubetrieben die Weiterverwendung vorhandener Sprühgeräte 11. Zur Erfüllung von Umweltanforderungen muss nicht in ein neues, kostenintensives Tunnelsprühgerät investiert werden. Hierdurch wird des Weiteren der Vorteil erreicht, dass erstmalig auch an Hanglagen eine umweltfreundliche Ausbringung von Pflanzenschutzmitteln ermöglicht wird.

Es kann erwähnt werden, dass der Druck in der Aufblasstruktur 4 in der Wendebetriebslage derart verändert werden kann, dass damit die Höhe der Tragestruktur 2 beeinflusst beziehungsweise festgelegt wird. Die fest aufgeblasene steife Hebestruktur 7 oder alternativ ein Gummizug oder Seilzug o.ä. erzeugt eine Kraft nach oben, die die Tragestruktur 2 und den daran befestigten Auffangschirm 3 nach oben zieht. Zusätzlich zum Gewicht der Tragestruktur 2 bewirkt die teilweise aufgeblasene Aufblasstruktur 4 eine Kraft nach unten, die die Aufblasstruktur 4 und den daran befestigten Auffangschirm 3 nach unten zieht. Je geringer der Druck in der Aufblasstruktur 4 in der Wendebetriebslage ist, desto höher kann der Auffangschirm 3 durch die Hebestruktur 7 angehoben werden. Durch die Festlegung beziehungsweise Regelung des Drucks in der Aufblasstruktur 4 oder des Druckverhältnisses der Drücke in der Hebestruktur 7 und der Aufblasstruktur 4 kann die Höhe des Auffangschirms 3 in der Wendebetriebslage an die Höhe der Pflanzenreihe angepasst werden.

Alternativ kann auch der Druck in der Aufblasstruktur 4 nicht direkt verändert, sondern nur der Druck in der Hebestruktur 7 verändert werden, um ein Schwenken von der Auffangbetriebslage in die Wendebetriebslage zu bewirken.

## Patentansprüche

1. Vorrichtung (1) zur Vermeidung von Sprühnebelabdrift und/oder zum Auffangen und Recyceln von Pflanzenschutzbrühe mit einer Tragestruktur (2) und einem mit der Tragestruktur (2) verbundenen Auffangschirm (3) und/oder mit, mit der Tragestruktur (2) verbunden Sprühdüsen (13), wobei die Tragestruktur (2) zumindest teilweise aus einer Aufblasstruktur (4) besteht und der Auffangschirm (3) und/oder die Sprühdüsen (13) an der Aufblasstruktur (4) befestigt sind,
**dadurch gekennzeichnet, dass**
ein pneumatisches Gelenk (6) mit einer Hebestruktur (7) vorgesehen ist, und der Auffangschirm (3) und/oder die Sprühdüsen (13) von dem pneumatischen Gelenk (6) zwischen einer Auffangbetriebslage, zum Auffangen der Pflanzenschutzbrühe, beziehungsweise einer Sprühbetriebslage, zum Sprühen der Pflanzenschutzbrühe, und einer Wendebetriebslage, mit zur Auffangbetriebslage angehobenem Auffangschirm (3) beziehungsweise zur Sprühbetriebslage angehobenen Sprühdüsen (13), schwenkbar gelagert ist.

2. Vorrichtung (1) gemäß Anspruch 1, **dadurch gekennzeichnet, dass** die Hebestruktur (7) einen mit der Aufblasstruktur (4) verbundenen Aktor umfasst, wobei der Aktor dazu ausgebildet ist die Aufblasstruktur (4) in der Wendebetriebslage zu verformen.

3. Vorrichtung (1) gemäß Anspruch 2, **dadurch gekennzeichnet, dass** der Aktor einen Seilzug, einen Gummizug, oder ein Gestänge umfasst.

4. Vorrichtung (1) gemäß Anspruch 1, **dadurch gekennzeichnet, dass** die Hebestruktur (7) aufblasbar ist, und dass das pneumatische Gelenk (6) auf einer veränderbaren Steifigkeit der Hebestruktur (7) und/oder der Aufblasstruktur (4) basiert.

5. Vorrichtung (1) gemäß Anspruch 4, **dadurch gekennzeichnet, dass** das pneumatische Gelenk (6) eine Druckeinrichtung zur Änderung des Drucks, insbesondere des Luftdrucks in der Aufblasstruktur (4) und/oder der Hebestruktur (7) aufweist und, dass das pneumatische Gelenk (6) durch Erhöhung des Drucks in der Hebestruktur (7) und/oder Verminderung eines Drucks in der Aufblasstruktur (4) zum Schwenken des Auffangschirms (3) und/oder der Sprühdüsen (13) von der Auffangbetriebslage beziehungsweise der Sprühbetriebslage in die Wendebetriebslage ausgebildet ist.

6. Vorrichtung (1) gemäß Anspruch 5, **dadurch gekennzeichnet, dass** das pneumatische Gelenk (6) durch Verminderung des Drucks in der Hebestruktur (7) und/oder Erhöhung des Drucks in der Aufblasstruktur (4) zum Schwenken des Auffangschirms (3) und/oder der Sprühdüsen (13) von der Wendebetriebslage in die Auffangbetriebslage beziehungsweise in die Sprühbetriebslage ausgebildet ist.

7. Vorrichtung (1) gemäß Anspruch 1, **dadurch gekennzeichnet, dass** das pneumatische Gelenk (6) eine Einschnüreinheit umfasst, wobei die Einschnüreinheit zum Einschnüren des aufgeblasenen Querschnitts der Aufblasstruktur (4) vorgesehen ist und, dass das pneumatische Gelenk (6) durch Einschnüren der Aufblasstruktur (4) zum Schwenken des Auffangschirms (3) und/oder der Sprühdüsen (13) von der Auffangbetriebslage beziehungsweise der Sprühbetriebslage in die Wendebetriebslage ausgebildet ist.

8. Vorrichtung (1) gemäß einem der Ansprüche 4 oder 7, **dadurch gekennzeichnet, dass** das pneumatische Gelenk (6) eine Einschnüreinheit umfasst, wobei die Einschnüreinheit zum Einschnüren des aufgeblasenen Querschnitts der Hebestruktur (7) vorgesehen ist und, dass das pneumatische Gelenk (6) durch Einschnüren der Hebestruktur (7) zum Schwenken des Auffangschirms (3) und/oder der Sprühdüsen (13) von der Wendebetriebslage in die Auffangbetriebslage beziehungsweise in die Sprühbetriebslage ausgebildet ist.

9. Vorrichtung (1) gemäß Anspruch 1, **dadurch gekennzeichnet, dass** das pneumatische Gelenk (6) eine Eindrückeinheit umfasst, wobei die Eindrückeinheit zum Eindrücken des aufgeblasenen Querschnitts der Aufblasstruktur (4) vorgesehen ist und, dass das pneumatische Gelenk (6) durch Eindrücken der Aufblasstruktur (4) zum Schwenken des Auffangschirms (3) und/oder der Sprühdüsen (13) von der Auffangbetriebslage beziehungsweise der Sprühbetriebslage in die Wendebetriebslage ausgebildet ist.

10. Vorrichtung (1) gemäß einem der Ansprüche 4 oder 9, **dadurch gekennzeichnet, dass** das pneumatische Gelenk (6) eine Eindrückeinheit umfasst, wobei die Eindrückeinheit zum Eindrücken des aufgeblasenen Querschnitts der Hebestruktur (7) vorgesehen ist und, dass das pneumatische Gelenk (6) durch Eindrücken der Hebestruktur (7) zum Schwenken des Auffangschirms (3) und/oder der Sprühdüsen (13) von der Wendebetriebslage in die Auffangbetriebslage beziehungsweise in die Sprühbetriebslage ausgebildet ist.

11. Vorrichtung (1) gemäß einem der Ansprüche 4 bis 10, **dadurch gekennzeichnet, dass** die Hebestruktur (7) von der Aufblasstruktur (4) zumindest teilweise umschlossen ist.

12. Vorrichtung (1) gemäß einem der Ansprüche 1 bis 11, **dadurch gekennzeichnet, dass** die Tragestruktur (2) eine Verschubeinheit (9) aufweist, welche dazu ausgebildet die Aufblasstruktur (4) im Wesentlichen quer zur Ausdehnung des Auffangschirms (3), beziehungsweise im Wesentlichen in Richtung der Sprühdüsen (13) zu verschieben.

13. Vorrichtung (1) gemäß Anspruch 12, **dadurch gekennzeichnet, dass** die Verschubeinheit (9) einen Linearaktuator umfasst.

14. Landwirtschaftliches Fahrzeug (8) mit einem Sprühgerät (11) zum Versprühen von Pflanzenschutzbrühe, **dadurch gekennzeichnet, dass** eine Vorrichtung (1) gemäß einem der Ansprüche 1 bis 13 zur Vermeidung von Sprühnebelabdrift und/oder Auffangen und Recycling von Pflanzenschutzbrühe vorgesehen ist.

15. Fahrzeug (8) gemäß Anspruch 14, **dadurch gekennzeichnet, dass** beidseitig zum Sprühgerät (11) zwei einander gegenüberliegende Vorrichtungen (1) gemäß einem der Ansprüche 1 bis 12 vorgesehen sind.

16. Fahrzeug (8) gemäß einem der Ansprüche 14 oder 15, **dadurch gekennzeichnet, dass** die Vorrichtung (1) eine Tragestruktur (2) aufweist, die ein Nachrüsten der einen oder der beiden Vorrichtungen (1) auf dem Fahrzeug (8) mit Sprühgerät (11) ermöglicht.
